# EUROPEAN PATENT APPLICATION

(11) **EP 3 287 952 A1**
(43) Date of publication of application: **28.02.2018**
(21) Application number: 15889929.4
(22) Date of filing: 24.04.2015
(51) Int. Cl.: G06K 9/62, G06F 3/0488

(54) **INPUT CONTROL PROGRAM, INPUT CONTROL DEVICE, INPUT CONTROL METHOD, CHARACTER CORRECTION PROGRAM, CHARACTER CORRECTION DEVICE, AND CHARACTER CORRECTION METHOD**

(71) Applicant: Fujitsu Limited, Kawasaki-shi, Kanagawa 211-8588 (JP)
(72) Inventor: MATSUDA, Yugo, Kawasaki-shi Kanagawa 211-8588 (JP); TSUYUKI, Yasuhiro, Kawasaki-shi Kanagawa 211-8588 (JP)
(74) Representative: Hoffmann Eitle
(86) International application number: PCT/JP2015/062609
(87) International publication number: WO 2016/170690

(57) **Abstract**

A computer is caused to execute a process of displaying a stroke in association with an input item, the stroke being input by handwriting with respect to the input item and the stroke being saved in association with the input item; and a process of correcting an input result obtained from the stroke displayed in the input item, according to a correction made with respect to the displayed stroke.

## Description

### TECHNICAL FIELD

The present invention is related to an input control program, an input control device, an input control method, a character correction program, a character correction device, and a character correction method.

### BACKGROUND ART

There is known a tool that accepts handwriting input from a user, and processes recognized characters (letters) obtained by character recognition with respect to the handwriting input, as input characters.

### CITATION LIST

### PATENT LITERATURE

[PTL 1]
   Japanese Unexamined Patent Application Publication No. 2005-235116
[PTL 2]
   Japanese Unexamined Patent Application Publication No. 2001-337993

### SUMMARY OF INVENTION

### TECHNICAL PROBLEM

However, even when the user performs handwriting input and character recognition is normally performed, there are cases in which the user desires to correct the characters to characters having different contents. For example, although characters have been handwritten in the order of year, month, and date, there are cases where the user wants to change the input order into an order of month, year, and date.

In such a case, although the date part is the same, the user has to manually input the month, the year, and the date from the beginning, which is problematic in that the correction workload is high and inconvenient.

Also, in recognizing characters of handwriting input including a plurality of character types, the character type and the interval of the preceding and succeeding characters, the size, the height, the shape, and the aspect ratio, etc., of the characters affect the recognition accuracy. Therefore, in the case of correcting the input content by handwriting input, when recognizing and correcting a single character by input by handwriting, the character may be erroneously recognized as a character having a similar character shape of a different character type, etc.

According to one aspect, an object is to make it possible to correct the recognition result of handwriting input, by correcting strokes input by handwriting.

Furthermore, according to one aspect, an object is to make it possible to refer to handwritten strokes even after the input is validated, with respect to an item to which recognition characters of handwriting input have been input.

### SOLUTION TO PROBLEM

According to an embodiment, a computer is caused to execute a process of displaying a stroke in association with an input item, the stroke being input by handwriting with respect to the input item and the stroke being saved in association with the input item; and a process of correcting an input result obtained from the stroke displayed in the input item, according to a correction made with respect to the displayed stroke.

### ADVANTAGEOUS EFFECTS OF INVENTION

According to one aspect, it is possible to correct the recognition result of handwriting input, by correcting strokes input by handwriting.

Furthermore, according to one aspect, it is possible to refer to handwritten strokes even after the input is validated, with respect to an item to which recognition characters of handwriting input have been input.

### BRIEF DESCRIPTION OF DRAWINGS

FIG. 1 is a diagram for describing the main program configuration according to a first embodiment;
FIG. 2 is a diagram for describing correction by handwriting input in a character correction device;
FIG. 3 is a diagram illustrating an example of a hardware configuration of the character correction device;
FIG. 4 is a diagram for describing a functional configuration of the character correction device according to the first embodiment;
FIG. 5 is a diagram illustrating an example of a configuration of stroke association information;
FIG. 6 is a flowchart illustrating an example of a handwriting input process according to the first embodiment;
FIG. 7 is a flowchart illustrating an example of a display text correction process according to the first embodiment;
FIG. 8 is a diagram for describing a specific example of display text correction according to the first embodiment;
FIG. 9 is a flowchart illustrating an example of a handwriting correction process according to the first embodiment;
FIG. 10 is a diagram for describing a specific example of handwriting correction according to the first embodiment;
FIG. 11 is a diagram for describing the functional configuration of the character correction device according to a second embodiment;
FIG. 12 is a flowchart illustrating an example of a display stroke display process according to the second embodiment;
FIG. 13 indicates diagrams for describing a specific example of the display strokes according to the second embodiment;
FIG. 14 is a diagram for describing the functional configuration of the character correction device according to a third embodiment;
FIG. 15 is a flowchart illustrating an example of a display text correction process according to the third embodiment;
FIG. 16 is a diagram for describing a specific example of display text correction according to the third embodiment;
FIG. 17 is a diagram for describing an example of the character correction system according to a fourth embodiment; and
FIG. 18 is a diagram illustrating an example of the character correction system according to a fifth embodiment.

### DESCRIPTION OF EMBODIMENTS

### (First embodiment)

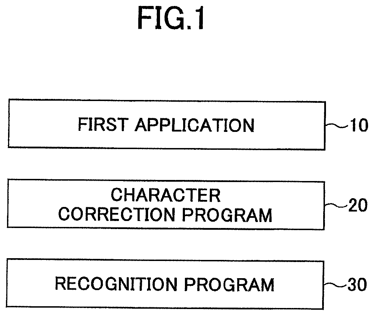

A first embodiment will be described below with reference to the drawings. FIG. 1 is a diagram for describing the main program configuration according to the first embodiment.

The first embodiment includes, as main programs, a first application 10, a character correction program 20, and a recognition program 30.

The first application 10 is a program for displaying an input character group (text) of, for example, a slip creation application or a mail creation application, etc. The text displayed by the first application 10 is hereinafter referred to as "display text". Note that the display text is not limited to characters input by handwriting; for example, characters input by a keyboard, etc., may be included.

The character correction program 20 displays strokes that have been input by handwriting, when an instruction to correct a character (letter) with respect to a display text that has been input by handwriting, is given. Furthermore, when a correction is made to a character by handwriting input, with respect to the displayed strokes (display strokes), the character correction program 20 corrects the display strokes based on the input strokes. Note that the handwriting input is not limited to the case of inputting strokes with a finger; strokes may be input using a stylus, etc., for example.

The recognition program 30 recognizes characters from strokes input by handwriting and from corrected display strokes. That is, the recognition program 30 acquires, as a recognition result, a character or a character group corresponding to strokes input by handwriting or corrected display strokes.

The first application 10, the character correction program 20, and the recognition program 30 according to the first embodiment may be installed in separate devices, or may be installed in one device. In the following description of the first embodiment, a case where the first application 10, the character correction program 20, and the recognition program 30 are installed in one device, will be described. In the following description, the device in which the first application 10, the character correction program 20, and the recognition program 30 are installed, is referred to as a "character correction device".

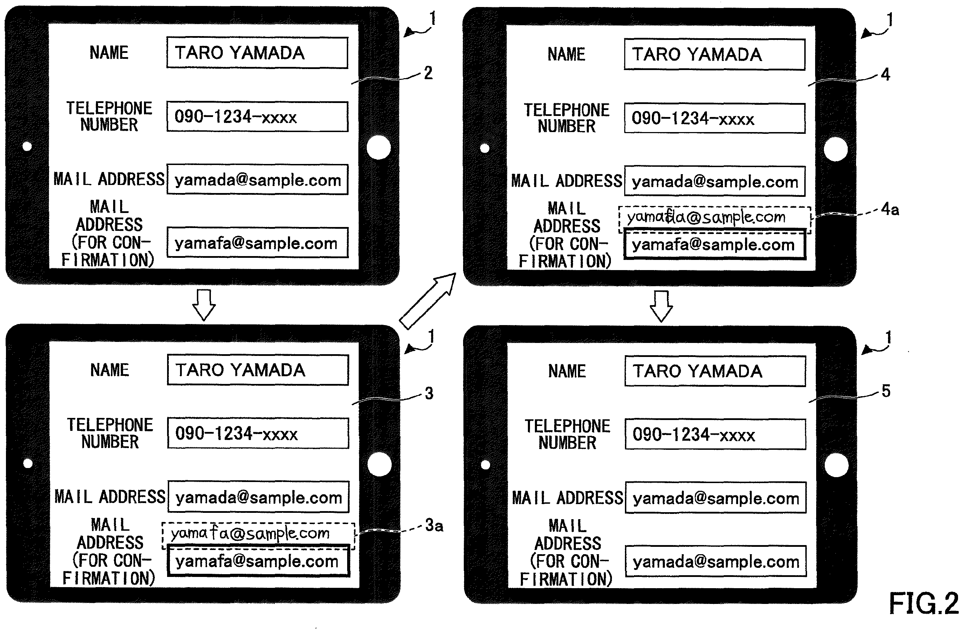

Next, a case where the display text is corrected by handwriting input in the character correction device according to the first embodiment, will be described. FIG. 2 is a diagram for describing correction by handwriting input in the character correction device.

It is assumed that a screen 2 is displayed on a character correction device 1. On the screen 2, a display text "Taro Yamada" indicating the name and a display text "090-1234-XXXX" indicating the telephone number, are displayed. Furthermore, on the screen 2, a display text "yamada@sample.com" indicating a mail address and a display text "yamafa@sample.com" indicating a mail address (for confirmation), are displayed. A description will be given of a case of correcting a display text "yamafa@sample.com" that is a mail address (for confirmation), which has been erroneously input, to "yamada@sample.com", by handwriting. Note that each display text on the screen 2 is displayed by the first application 10.

In the correction by the handwriting input of the present embodiment, when the user specifies the display text to be corrected with a touch panel, etc., of the character correction device 1 as indicated on a screen 3, the character correction program 20 displays display strokes 3a indicating strokes that have been input at the time when the specified display text has been input by handwriting. Here, in FIG. 2, the display strokes 3a are displayed at a different position from the display text. Furthermore, the display color of the display strokes 3a may be a different color from that of the display text. Accordingly, the display strokes 3a become easy to see, and the user can easily perform the handwriting input.

When the screen 3 is displayed, as indicated on a screen 4, the user corrects display strokes 4a directly by handwriting input, with the touch panel, etc., of the character correction device 1. That is, the user directly inputs "d" by handwriting at the position of "f" that had been input when the display stroke 4a had been input by handwriting, with the touch panel, etc., of the character correction device 1.

Then, the character correction device 1 corrects the handwritten "f" to "d", by the character correction program 20. In this manner, the character correction device 1 corrects the display strokes "yamafa@sample.com" to "yamada@sample.com", by the character correction program 20.

Subsequently, the character correction program 20 transfers information indicating the strokes of the corrected display strokes "yamada@sample.com", to the recognition program 30. The recognition program 30 recognizes the character string "yamada@sample.com" from the information indicating the strokes, and transfers the character strings, to which the correction is applied, to the first application 10 as a recognition result.

As described above, when some of the strokes have been corrected in the display strokes corresponding to the display text to be corrected, the character correction device 1 once again causes the recognition program 30 to recognize all of the display strokes including the corrected strokes.

Therefore, in the present embodiment, it is possible to cause the recognition program 30 to perform character recognition including the character type and the interval of characters before and after the corrected strokes, the size, the height, the shape, and the aspect ratio, etc., of characters, and it is possible to improve the recognition accuracy of the corrected strokes.

In the example of FIG. 2, all of the display strokes "yamada@sample.com" including the corrected display strokes "d", are recognized by the recognition program 30. Therefore, for example, since the character type of the character before and after the corrected display stroke "d", is a lower case alphabetical letter, the recognition program 30 can recognize that the corrected display stroke "d" is a lower case alphabetical letter.

The first application displays the recognition result character group "yamada@sample.com". In the example of FIG. 2, as indicated on a screen 5, the display text "yamafa@sample.com" becomes the corrected display text "yamada@sample.com".

In this manner, the character correction device 1 according to the first embodiment displays the display strokes of the display text to be corrected, among the display texts displayed by the first application 10. Then, the user can correct the character or the character group by direct handwriting input to the display strokes, with the touch panel, etc., of the character correction device 1.

In the correction by the handwriting input in FIG. 2, the correction of replacing the letter "f" included in the display text, with the letter "d", has been described; however, it is also possible make a correction by inserting a letter "d" before or after the letter "f" included in the display text.

Also, in the example of FIG. 2, the display text to be corrected includes a plurality of characters; however, the present invention is not limited as such. Among the display texts displayed by the first application 10, the display text to be corrected by handwriting input may include one character.

Furthermore, the number of characters to be corrected by handwriting correction may be two or more (that is, a character group may be replaced or inserted). Hereinafter, the handwriting correction will be described in detail.

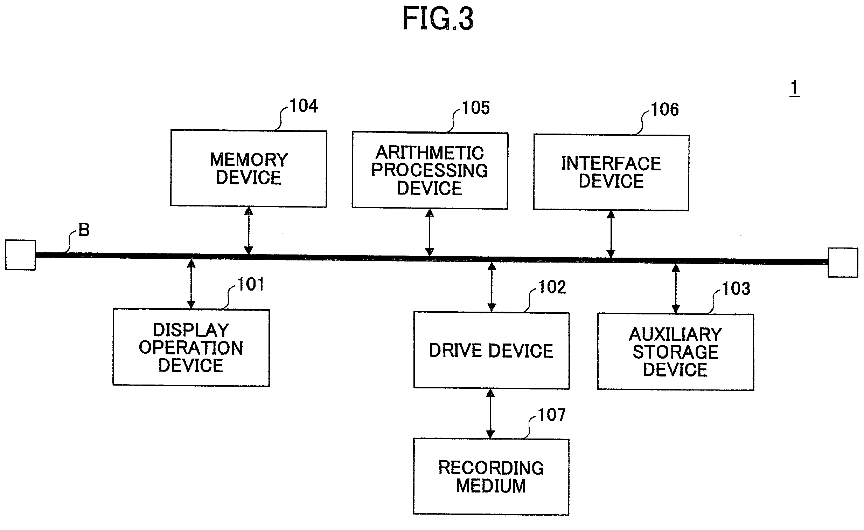

First, a hardware configuration of the character correction device 1 will be described. FIG. 3 is a diagram illustrating an example of a hardware configuration of the character correction device. The character correction device 1 according to the present embodiment includes a display operation device 101, a drive device 102, an auxiliary storage device 103, a memory device 104, an arithmetic processing device 105, and an interface device 106, which are interconnected by a bus B.

The display operation device 101 is, for example, a touch panel, etc., and is used for inputting various signals and for displaying (outputting) various signals. The interface device 106 includes a model and a LAN card, etc., and is used for connecting to a network.

The first application 10, the character correction program 20, and the recognition program 30 are at least a part of various programs for controlling the character correction device 1. These programs are provided, for example, by being distributed in a recording medium 107 or by being downloaded from a network. The recording medium 107 in which the first application 10, the character correction program 20, and the recognition program 30 are recorded, may be various types of recording media such as a recording medium that records information optically, electrically, or magnetically, such as a CD-ROM, a flexible disk, a magneto-optical disk, and a semiconductor memory that electrically records information such as a ROM and a flash memory, etc.

Furthermore, when the recording medium 107 in which the first application 10, the character correction program 20, and the recognition program 30 are recorded, is set in the drive device 102, each program is installed in the auxiliary storage device 103 from the recording medium 107 via the drive device 102. Each program downloaded from the network is installed in the auxiliary storage device 103 via the interface device 106.

The auxiliary storage device 103 stores the installed first application 10, the character correction program 20, and the recognition program 30, and also stores an OS (Operating System) which is basic software, and files and data that are needed, etc. The memory device 104 reads and stores the respective programs in the auxiliary storage device 103 at the time of activating each program. Then, the arithmetic processing device 105 implements various processes as described later in accordance with each program stored in the memory device 104.

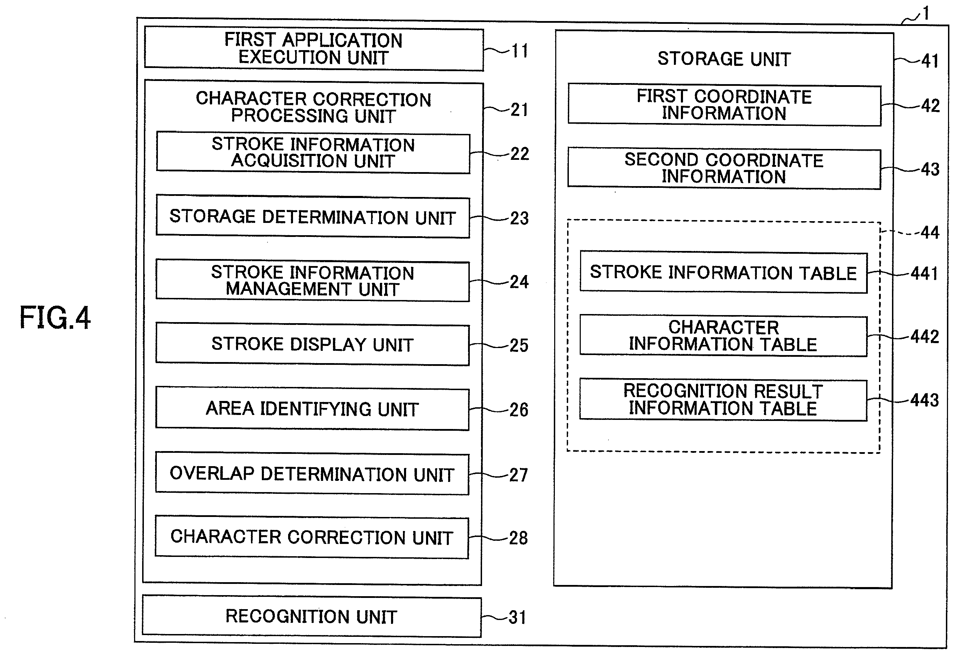

Next, a functional configuration of the character correction device 1 will be described. FIG. 4 is a diagram for describing a functional configuration of the character correction device according to the first embodiment. The character correction device 1 according to the present embodiment includes a first application execution unit 11, a character correction processing unit 21, a recognition unit 31, and a storage unit 41.

The first application execution unit 11 according to the present embodiment is implemented by the arithmetic processing device 105 executing the first application 10. The character correction processing unit 21 according to the present embodiment is implemented by the arithmetic processing device 105 executing the character correction program 20. The recognition unit 31 according to the present embodiment is implemented by the arithmetic processing device 105 executing the recognition program 30. The storage unit 41 according to the present embodiment is implemented by the auxiliary storage device 103 and the memory device 104.

The storage unit 41 includes first coordinate information 42, second coordinate information 43, and stroke association information 44.

The first coordinate information 42 is coordinate information for identifying the circumscribing frame of each character formed by the display strokes. Here, a circumscribing frame is a rectangular frame circumscribing a character. Therefore, the first coordinate information 42 includes first top coordinate information that identifies the upper side of the circumscribing frame, first bottom coordinate information that identifies the bottom side of the circumscribing frame, first left coordinate information that identifies the left side of the circumscribing frame, and first right coordinate information that identifies the right side of the circumscribing frame.

The second coordinate information 43 is coordinate information for identifying the circumscribing frame of the strokes input by the user's handwriting. Similar to the first coordinate information 42, the second coordinate information 43 includes second top coordinate information, second bottom coordinate information, second left coordinate information, and second right coordinate information identifying the respective sides of the circumscribing frame.

Note that the circumscribing frame is not limited to a rectangle; the circumscribing frame may be a polygon. In the case of a polygon, the first coordinate information 42 and the second coordinate information 43 will include coordinate information for identifying each side of the polygon.

The stroke association information 44 is information for associating stroke information, which indicates a stroke input by handwriting, with a character that is a recognition result obtained by the recognition unit 31 described later. The stroke association information 44 according to the present embodiment includes a stroke information table 441, a character information table 442, and a recognition result information table 443. Details of the stroke association information 44 will be described later.

Note that the stroke information is information indicating a stroke (penmanship) of one segment input by handwriting, and includes two or more pieces of coordinate information. That is, in the present embodiment, by connecting the coordinates indicated by two or more pieces of coordinate information included in the stroke information, a stroke for one segment is identified. Therefore, the recognition unit 31 recognizes a character formed by the strokes indicated by the stroke information.

Here, each piece of coordinate information included in the first coordinate information 42, the second coordinate information 43, and the stroke information indicates, for example, XY coordinate values, with respect to a reference point set in advance in a page image displayed by the character correction device 1, as the origin. The reference point may be, for example, the position of the pixel at the upper left end of the page image displayed by the character correction device 1. Here, for example, with the reference point as the origin, the X axis is positive to the right direction from the reference point, and the Y axis is positive to the downward direction from the reference point.

The first application execution unit 11 displays the characters acquired from the recognition unit 31.

The character correction processing unit 21 associates the stroke information input by handwriting, with the character that is the recognition result obtained by the recognition unit 31, and stores this information in the storage unit 41 as the stroke association information 44. Furthermore, the character correction processing unit 21 displays the display strokes based on the stroke association information 44, in response to an instruction to correct the display text displayed by the first application execution unit 11. Furthermore, the character correction processing unit 21 corrects the display strokes according to handwriting input. Details of the character correction processing unit 21 will be described later.

The recognition unit 31 recognizes characters from stroke information input by handwriting and stroke information of display strokes corrected by the character correction processing unit 21, and acquires characters as a recognition result.

Details of the character correction processing unit 21 will be described below. The character correction processing unit 21 according to the present embodiment includes a stroke information acquisition unit 22, a storage determination unit 23, a stroke information management unit 24, a stroke display unit 25, an area identifying unit 26, an overlap determination unit 27, and a character correction unit 28.

The stroke information acquisition unit 22 acquires stroke information indicating a stroke input by handwriting by the user.

The storage determination unit 23 determines whether to store the stroke association information 44 based on the stroke information acquired by the stroke information acquisition unit 22, in the storage unit 41.

Specifically, the storage determination unit 23 according to the present embodiment determines whether to store the stroke association information 44, in accordance with a parameter indicating an attribute of a character input field (text box, etc.) in which the display text is displayed by the first application 10. For example, when the attribute of the character input field to which the character is input by handwriting, is a parameter indicating that the input field is a password input field, the storage determination unit 23 determines not to store the stroke association information 44.

As described above, in the present embodiment, when information is handwritten into an input field, etc., where highly confidential information such as user's personal information is input, the stroke association information 44 is not stored. Therefore, in the present embodiment, it is possible to prevent information leakage.

The stroke information management unit 24 associates the stroke information acquired by the stroke information acquisition unit 22 with the characters acquired as the recognition result by the recognition unit 31, to generate the stroke association information 44, and stores the stroke association information 44 in the storage unit 41, in accordance with the determination result of the storage determination unit 23.

The stroke display unit 25 displays the display stroke based on the stroke association information 44 stored by the stroke information management unit 24.

The area identifying unit 26 acquires the first coordinate information 42 from the stroke association information 44 of the display strokes. Then, the area identifying unit 26 identifies an area (display stroke area) surrounded by the circumscribing frame identified by the first coordinate information 42.

Furthermore, the area identifying unit 26 acquires the second coordinate information 43 from the stroke information indicating strokes input by handwriting in order to correct the display stroke. Then, the area identifying unit 26 identifies an area (input stroke area) surrounded by the circumscribing frame identified by the second coordinate information 43.

The overlap determination unit 27 determines, with respect to a display stroke area and an input stroke area identified by the area identifying unit 26, whether the proportion of an area of the input stroke area overlapping the display stroke area, is greater than or equal to a first threshold value set in advance.

In accordance with the determination result obtained by the overlap determination unit 27, the character correction unit 28 corrects the display strokes by replacing the display strokes with strokes input by handwriting, or by inserting strokes input by handwriting.

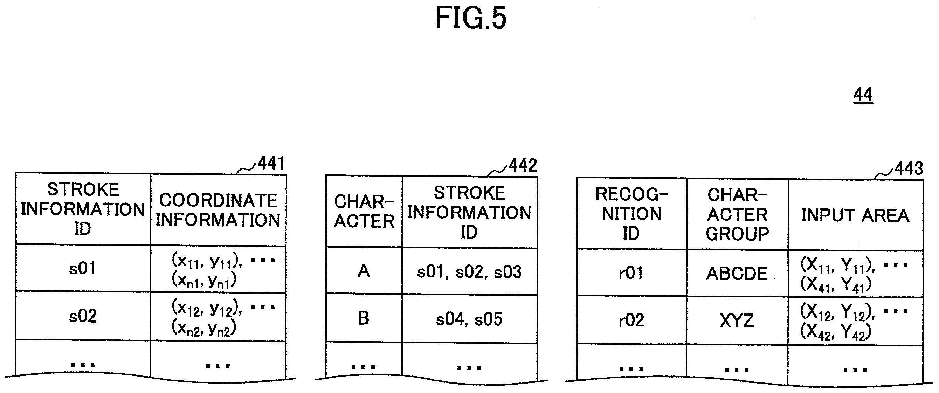

Next, the details of the stroke association information 44 will be described. FIG. 5 is a diagram illustrating an example of a configuration of the stroke association information. The stroke association information 44 includes a stroke information table 441, a character information table 442, and a recognition result information table 443.

The stroke information table 441 stores stroke information indicating a stroke of one segment input by handwriting. The stroke information table 441 includes, as data items, "stroke information ID" for uniquely identifying stroke information, and "coordinate information" for forming a stroke of one segment.

For example, the stroke information identified by a stroke information ID "s01" is formed by connecting the coordinates indicated by the coordinate information (x₁₁, y₁₁), ···, (xₙ₁, yₙ₁).

The character information table 442 stores information relating to characters formed by strokes. The character information table 442 includes, as data items, "character" indicating a character formed by strokes, and "stroke information ID" for identifying strokes forming the character.

For example, in the character information table 442, a letter "A" is formed with strokes indicated by stroke information identified by the stroke information IDs "s01", "s02", and "s03". Similarly, for example, a letter "B" is formed with strokes indicated by stroke information identified by the stroke information IDs "s04" and "s05".

The recognition result information table 443 stores information relating to characters acquired as recognition results of the recognition unit 31. The recognition result information table 443 includes, as data items, "recognition ID" for identifying a recognition result obtained by the recognition unit 31, "character group" indicating characters obtained as a recognition result, and "input area" indicating coordinate information for identifying an input area in which characters acquired as a recognition result are displayed by the first application 10.

For example, in the recognition result information table 443, a character group acquired as a recognition result identified by a recognition ID "r01" is "ABCDE", and the character (letter) group "ABCDE" is displayed in an input area identified by coordinates indicated by the coordinate information (X₁₁, Y₁₁), ···, (X₄₁, Y₄₁).

Here, the input area is an area in which a character group recognized by one recognition process by the recognition unit 31, is input by handwriting.

For example, it is assumed that in the character input field displayed by the first application 10, after a character group "abc" input by handwriting is recognized, a character group "def" is input by handwriting in the same character input field and recognized. In this case, the recognition unit 31 performs two recognition processes. Therefore, in the character input field, there are two areas, namely, an input area corresponding to the character group "abc", and an input area corresponding to the character group "def".

Note that in the example of FIG. 5, the input area is identified by four pieces of coordinate information indicating the vertices of the input area. However, the present embodiment is not limited as such; the input area may be identified by two pieces of coordinate information indicating the vertices located on the diagonal of the input area.

In the character correction device 1 according to the present embodiment, by saving the stroke association information 44 indicated in FIG. 5, when the display text to be corrected is specified by the user, the stroke display unit 25 can display the display strokes corresponding to the display text.

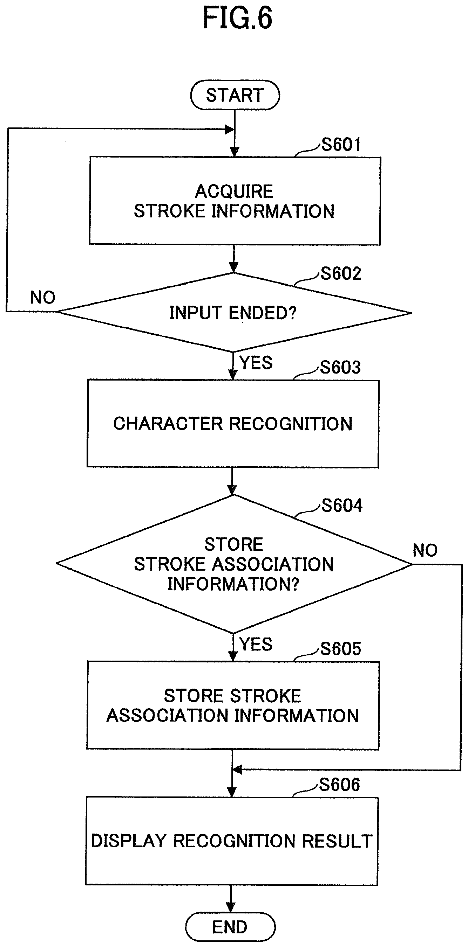

Next, operations by the character correction device 1 according to the present embodiment will be described. First, a process of inputting characters by handwriting in a character input field (for example, a text box), etc., displayed by the first application 10 will be described. FIG. 6 is a flowchart illustrating an example of a handwriting input process according to the first embodiment.

In the character correction device 1 according to the present embodiment, the stroke information acquisition unit 22 of the character correction processing unit 21 acquires stroke information indicating strokes input by handwriting (step S601). Next, in the character correction device 1, the stroke information acquisition unit 22 of the character correction processing unit 21 determines whether the handwriting input has ended (step S602). Here, when the stroke information acquisition unit 22 does not acquire the stroke information for a predetermined time, the stroke information acquisition unit 22 may determine that the handwriting input has ended.

In step S602, when the stroke information acquisition unit 22 determines that the handwriting input has not ended, the character correction device 1 returns to step S601.

In step S602, when the stroke information acquisition unit 22 determines that the handwriting input has ended, the character correction device 1 recognizes the acquired stroke information by the recognition unit 31 (step S603). That is, the recognition unit 31 recognizes characters corresponding to the stroke information acquired by the stroke information acquisition unit 22, and acquires characters as a recognition result.

Next, in the character correction device 1, the storage determination unit 23 acquires a parameter indicating an attribute of a character input field to which characters are input by handwriting, and determines whether to store the stroke association information 44 based on the acquired parameter (step S604). Note that the storage determination unit 23 acquires the parameter indicating the attribute of a character input field displayed by the first application 10, via the first application execution unit 11.

In step S604, when the storage determination unit 23 determines that the stroke association information 44 is not to be stored, the character correction device 1 proceeds to step S606. Accordingly, when the character input field displayed by the first application 10 is, for example, a password input field, etc., the character correction device 1 does not store the stroke association information 44. Thus, in the password input field, etc., it is possible to prevent leakage of confidential information such as a password due to the display stroke being displayed.

In step S604, when the storage determination unit 23 determines that the stroke association information 44 is to be stored, in the character correction device 1, the stroke information management unit 24 stores the stroke association information 44 in the storage unit 41 (step S605).

Finally, in the character correction device 1, the first application execution unit 11 displays the characters acquired as a recognition result in the character input field displayed by the first application 10 (step S606). Thus, in the character correction device 1 according to the present embodiment, a display text of the handwriting input is displayed.

Here, the stroke association information 44 stored in the storage unit 41 by the stroke information management unit 24 in step S605 of FIG. 6, will be specifically described with reference to FIG. 5.

First, the stroke information management unit 24 stores the stroke information acquired by the stroke information acquisition unit 22 in the stroke information table 441. That is, the stroke information management unit 24 allocates a stroke information ID for each piece of stroke information indicating a stroke of one segment, and stores the coordinate information included in the stroke information in association with the stroke information ID. In this manner, the stroke information management unit 24 stores the stroke information of all of the input strokes in the stroke information table 441.

For example, when a letter "A" having three segments is input by handwriting, the stroke information management unit 24 allocates a stroke information ID "s01" to the stroke information of the first segment, and stores the stroke information ID in association with the coordinate information (x₁₁, y₁₁), ···, (xₙ₁, yₙ₁)included in the stroke information, in the stroke information table 441. Similarly, the stroke information management unit 24 allocates a stroke information ID "s02" to the stroke information of the second segment and stores the stroke information ID in association with the coordinate information (x₁₂, y₁₂), ···, (xₙ₂, yₙ₂) included in the stroke information, in the stroke information table 441. The same applies to the stroke information of the third segment.

Next, the stroke information management unit 24 stores the recognition result recognized by the recognition unit 31 in the recognition result information table 443. That is, the stroke information management unit 24 assigns a recognition ID to the characters acquired as a recognition result obtained by the recognition unit 31, and stores the recognition ID in association with coordinate information that identifies the input area. Note that the stroke information management unit 24 may acquire coordinate information for identifying the input area via the first application execution unit 11.

For example, when the characters acquired as the recognition result are "ABCDE", the stroke information management unit 24 allocates a recognition ID "r01" to the letters "ABCDE", and stores the recognition ID in association with the coordinate information (X₁₁, Y₁₁), ···, (Xₙ₁, Yₙ₁) identifying the input area acquired via the first application execution unit 11, in the recognition result information table 443.

Subsequently, the stroke information management unit 24 stores the association between each character acquired as a recognition result and stroke information, in the character information table 442. That is, the stroke information management unit 24 stores the stroke information ID of the stroke forming each character, in association with each character acquired as the recognition result by the recognition unit 31.

For example, when the characters acquired as the recognition result are "ABCDE", the stroke information management unit 24 stores the letter "A" included in the letters "ABCDE", in association with the stroke information IDs "s01", "s02", and "s03" of the strokes forming the letter "A", in the character information table 442 . Similarly, the stroke information management unit 24 stores the letter "B" included in the letters "ABCDE", in association with the stroke information IDs "s04" and "s05" of the strokes forming the letter "B", in the character information table 442. The same applies to the letters "C", "D", and "E" included in the letters "ABCDE".

As described above in detail, the character correction device 1 according to the present embodiment stores the stroke association information 44 by the stroke information management unit 24. In this way, in the character correction device 1 according to the present embodiment, the stroke information of strokes input by handwriting is stored in association with the display text.

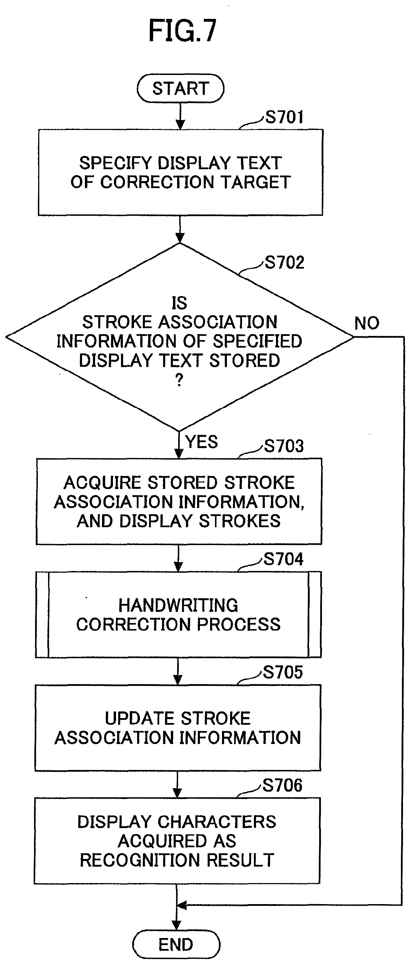

Next, a process in the case where the display text displayed by the first application 10 is corrected by handwriting input in the character correction device 1 according to the present embodiment will be described. FIG. 7 is a flowchart illustrating an example of a display text correction process according to the first embodiment.

In the character correction device 1 according to the present embodiment, a specification of a display text to be corrected is accepted via the display operation device 101 from the user (step S701). For example, in the character correction device 1, as the user selects a character input field in which a display text is displayed via the display operation device 101, the specification of the display text to be corrected is accepted.

Next, in the character correction device 1, the stroke information management unit 24 determines whether the stroke association information 44 of the specified display text is stored in the storage unit 41 (step S702). Specifically, the stroke information management unit 24 is to determine whether coordinate information identifying the input area of the specified display text, is stored in the recognition result information table 443.

In step S702, when the stroke information management unit 24 determines that the stroke association information 44 of the specified display text is not stored in the storage unit 41, the character correction device 1 ends the process. In this case, the user corrects the display text by handwriting input or keyboard input, etc., as described with reference to FIG. 6, for example. Note that the case where the stroke association information 44 of the display text is not stored in the storage unit 41 includes, for example, a case where the character input field in which the display text is displayed is for password input, etc., or when the display text has been input by a method other than handwriting, such as input by a keyboard, etc.

In step S702, when the stroke information management unit 24 determines that the stroke association information 44 of the specified display text is stored in the storage unit 41, the character correction device 1 acquires the stroke association information 44 by the stroke information management unit 24. Then, the character correction device 1 displays, by the stroke display unit 25, the display strokes based on the acquired stroke association information 44 (step S703).

That is, the stroke information management unit 24 acquires the stroke association information 44 of the specified display text. Next, the stroke information management unit 24 acquires stroke information indicating strokes that have been input when the display text has been input by handwriting, from the stroke association information 44 of the display text. Then, the stroke display unit 25 displays the display strokes based on the acquired stroke information. Thus, the character correction device 1 according to the present embodiment can display the strokes (display strokes) that have been input when the display text specified by the user has been input by handwriting.

Next, the character correction device 1 performs a handwriting correction process (step S704). That is, upon accepting a correction of the display stroke by handwriting input by the user, the character correction device 1 recognizes the strokes indicated by the corrected display strokes, and acquires the characters as the recognition result. Details of this handwriting correction process will be described later.

Subsequently, the character correction device 1 updates the stroke association information 44 based on the corrected display stroke, by the stroke information management unit 24 (step S705). That is, the stroke information management unit 24 stores, in the storage unit 41, the characters acquired as the recognition result from the strokes indicated by the corrected display strokes, and the stroke information of the corrected display strokes, in association with each other, thereby updating the stroke association information 44.

Finally, in the character correction device 1, the recognition unit 31 displays the characters acquired as the recognition result from the strokes indicated by the corrected display strokes (step S706). Accordingly, in the character correction device 1 according to the present embodiment, the display text specified by the user is corrected by handwriting input.

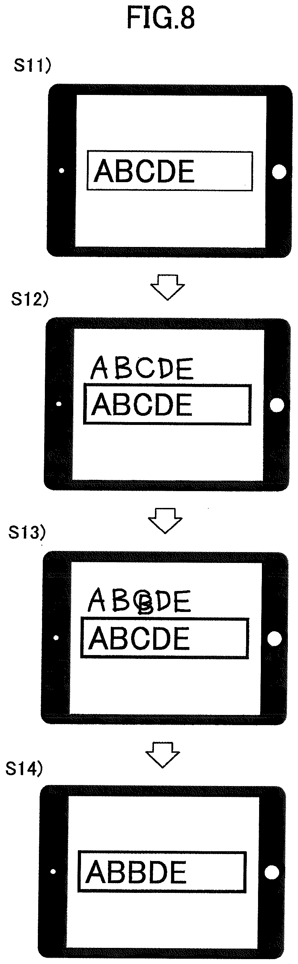

Next, with reference to FIG. 8, a case of correcting the display text, described with reference to FIG. 7, by handwriting input, will be specifically described. FIG. 8 is a diagram for describing a specific example of display text correction according to the first embodiment.

First, it is assumed that a display text "ABCDE" is displayed in a character input field of the character correction device 1 (state S11).

In the state S11, upon accepting a specification of a display text to be corrected from the user, the character correction device 1 displays display strokes indicating the strokes that have been input when the display text has been input by handwriting (state S12). In the example of FIG. 8, the character correction device 1 displays the display strokes that have been input when the display text "ABCDE", specified by the user, has been input by handwriting.

Next, the character correction device 1 accepts a correction with respect to the display strokes by handwriting input by the user (state S13). In the example of FIG. 8, the character correction device 1 accepts handwriting input for correcting the letter "C" of the display strokes, "ABCDE" to the letter "B".

Subsequently, the character correction device 1 displays the characters acquired as a recognition result of recognizing the strokes indicated by the corrected display strokes, and corrects the display text (state S14). In the example of FIG. 8, the character correction device 1 displays the display text in which the display text "ABCDE" has been corrected to "ABBDE".

As described above, in the character correction device 1 according to the present embodiment, the display text is corrected by the user directly correcting the display strokes by handwriting input.

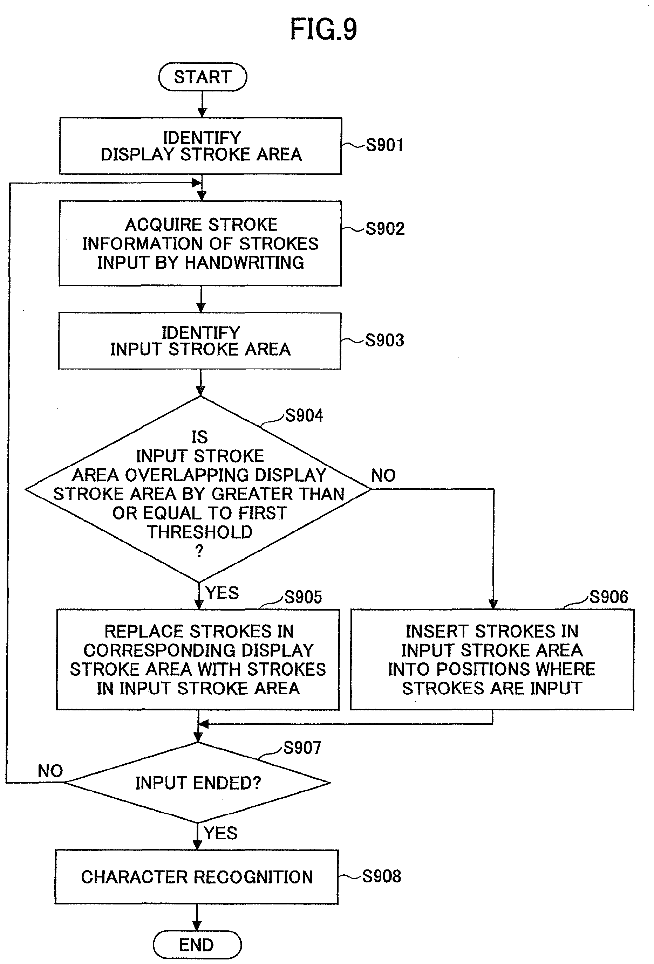

Next, the handwriting correction process in step S704 of the display text correction process described with reference to FIG. 7, will be described. FIG. 9 is a flowchart illustrating an example of a handwriting correction process according to the first embodiment. Note that as described above, the character correction device 1 is displaying strokes (display strokes) that have been input when the display text, specified by the user as the correction target, has been input by handwriting.

First, in the character correction device 1 according to the present embodiment, the area identifying unit 26 identifies a display stroke area (step S901). That is, the area identifying unit 26 acquires the stroke information of the strokes forming each character, with respect to each of the characters in the display strokes, and acquires the first coordinate information 42 of each character from the acquired stroke information. Then, for each character in the display strokes, the area identifying unit 26 identifies an area surrounded by a circumscribing frame identified in the first coordinate information 42 as the display stroke area.

Next, in the character correction device 1, the stroke information acquisition unit 22 acquires the stroke information of strokes input by handwriting by the user, with respect to the display strokes (step S902).

Next, the character correction device 1 identifies an input stroke area by the area identifying unit 26 (step S903). That is, the area identifying unit 26 acquires the second coordinate information 43 from the stroke information indicating the strokes input by handwriting by the user. Then, the area identifying unit 26 identifies an area surrounded by a circumscribing frame identified in the second coordinate information 43 as the input stroke area.

Subsequently, in the character correction device 1, the overlap determination unit 27 determines whether the proportion of the area of the input stroke area overlapping the display stroke area, is greater than or equal to a first threshold (step S904). Note that the first threshold value may be, for example, 1/2. In this case, the overlap determination unit 27 determines whether the input stroke area overlaps the display stroke area by one half or more (1/2) or more.

In step S904, when the overlap determination unit 27 determines that the proportion of the area of the input stroke area overlapping the display stroke area, is greater than or equal to the first threshold value, the character correction device 1 causes the character correction unit 28 to replace the strokes in the display stroke area with the strokes in the input stroke area (step S905). Note that at this time, the strokes in the display stroke area to be replaced, are the strokes in the display stroke area in which the proportion of the area overlapping the input stroke area is greater than or equal to the first threshold value.

In step S904, when the overlap determination unit 27 determines that the proportion of the area of the input stroke area overlapping the display stroke area is not greater than or equal to the first threshold, the character correction device 1 causes the character correction unit 28 to insert the strokes in the input stroke area, into positions where the strokes have been input by handwriting (step S906).

Subsequently, in the character correction device 1, the stroke information acquisition unit 22 determines whether the user's handwriting input to the display strokes has ended (step S907). Here, when the stroke information acquisition unit 22 does not acquire the stroke information for a predetermined time, the stroke information acquisition unit 22 may determine that handwriting input has ended.

In step S907, when the stroke information acquisition unit 22 determines that the handwriting input has not ended, the character correction device 1 returns to step S902.

In step S907, when the stroke information acquisition unit 22 determines that the handwriting input has ended, the character correction device 1 recognizes, by the recognition unit 31, the characters corresponding to the stroke information of the strokes indicated by the display strokes corrected by the user's handwriting input, and acquires the characters as the recognition result (step S908). At this time, the recognition unit 31 recognizes the characters corresponding to the stroke information indicated by the display strokes including the correction portions corrected by handwriting input. Accordingly, the character correction device 1 according to the present embodiment can perform character recognition including the character type and the interval of characters before and after the corrected strokes, the size, the height, the shape, and the aspect ratio, etc., of characters, and it is possible to improve the recognition accuracy of the corrected strokes.

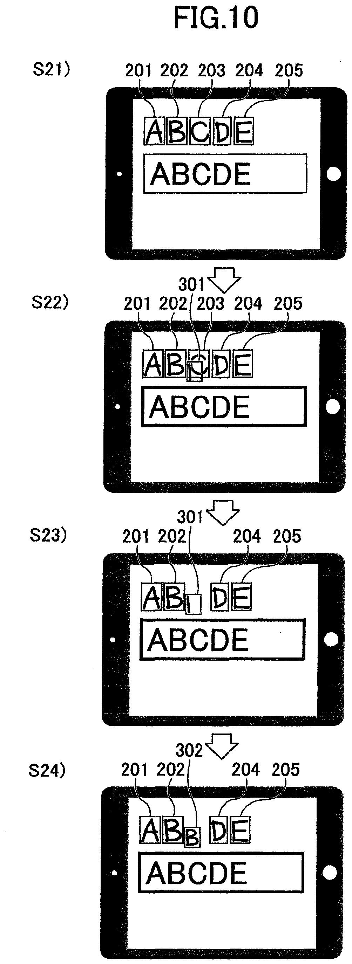

Next, with reference to FIG. 10, the case of correcting the display strokes by the handwriting input described with FIG. 9, will be specifically described. FIG. 10 is a diagram for describing a specific example of handwriting correction according to the first embodiment.

First, it is assumed that the display strokes corresponding to the display text "ABCDE" are displayed at the character correction device 1, and display stroke areas 201 to 205 are identified by the area identifying unit 26 (state S21).

Specifically, the area identifying unit 26 identifies the display stroke areas 201 to 205 as follows. First, the area identifying unit 26 acquires the first coordinate information 42 from the stroke information indicating the strokes of one character of the display strokes. Specifically, the area identifying unit 26 is to acquire the first coordinate information 42 by acquiring, from among the coordinate information included in the stroke information forming strokes of one character, coordinate information having the minimum Y coordinate as the first top coordinate information, coordinate information having the maximum Y coordinate as the first bottom coordinate information, coordinate information having the minimum X coordinate as the first left coordinate information, and coordinate information having the maximum X coordinate as the first right coordinate information. In this way, first coordinate information 42₁ of the letter "A", first coordinate information 42₂ of the letter "B", ..., first coordinate information 42₅ of the letter "E" in the display strokes, are acquired.

Then, the area identifying unit 26 identifies the display stroke area 201 from the acquired first coordinate information 42₁. Similarly, the area identifying unit 26 identifies the display stroke areas 202 to 205 from the first coordinate information 42₂ to the first coordinate information 42₅, respectively.

In state S21, the character correction device 1 accepts input of the stroke of the first segment of the letter "B", that is input in order to correct the letter "C" of the display strokes to "B". Then, the character correction device 1 identifies an input stroke area 301 by the area identifying unit 26 (state S22).

Specifically, the area identifying unit 26 identifies the input stroke area 301 as follows. First, the area identifying unit 26 acquires the second coordinate information 43 from the stroke information of the input strokes. Specifically, the area identifying unit 26 is to acquire the second coordinate information 43 by acquiring, from among the coordinate information included in the stroke information of the input strokes, coordinate information having the minimum Y coordinate as the second top coordinate information, coordinate information having the maximum Y coordinate as the second bottom coordinate information, coordinate information having the minimum X coordinate as the second left coordinate information, and coordinate information having the maximum X coordinate as the second right coordinate information.

Then, the area identifying unit 26 identifies the input stroke area 301 from the acquired second coordinate information 43.

Subsequently, the character correction device 1 determines, by the overlap determination unit 27, whether the input stroke area 301 overlaps each of the display stroke areas 201 to 205, by greater than or equal to a first threshold value. Then, the character correction device 1 replaces the strokes in the display stroke area with the strokes in the input stroke area 301, or inserts the strokes in the input stroke area 301 into the display stroke area, according to the determination result by the character correction unit 28.

In the state S22 of FIG. 10, the input stroke area 301 overlaps a display stroke area 203. Furthermore, in the state S22 of FIG. 10, the proportion of the area in the input stroke area 301 overlapping the display stroke area 203, is 1/2 or more. Therefore, the overlap determination unit 27 determines that the input stroke area 301 overlaps the display stroke area 203 by greater than or equal to a first threshold.

Based on the above determination result, the character correction unit 28 replaces the strokes indicating the letter "C" in the display stroke area 203, with a stroke indicating the first segment of the letter "B" in the input stroke area 301 (state S23).

In the state S23, the character correction device 1 accepts input of a stroke of the second segment of the letter "B". Then, the character correction device 1 identifies an input stroke area 302 identified by a circumscribing frame of strokes combining the first segment and the second segment.

Then, the character correction device 1 determines, by the overlap determination unit 27, whether the input stroke area 302 overlaps the display stroke areas 201, 202, 204, and 205, respectively, by greater than or equal to a first threshold value. Then, the character correction device 1 replaces the stroke in the display stroke area with the stroke in the input stroke area 301, or inserts the strokes in the input stroke area 301 into the display stroke area, according to the determination result by the character correction unit 28 (state S24).

In step S24 of FIG. 10, the input stroke area 302 does not overlap any of the display stroke areas 201, 202, 204, or 205. Therefore, the overlap determination unit 27 determines that the input stroke area 302 does not overlap any of the display stroke areas 201, 202, 204, or 205 by greater than or equal to a first threshold.

Based on this determination result, the character correction unit 28 inserts the strokes indicating the first and second segments of the letter "B" in the input stroke area 302, at the positions where these strokes have been input.

As described above, in the character correction device 1 according to the present embodiment, the user can directly correct the strokes by handwriting input with respect to the display strokes. Furthermore, as described above, the character correction device 1 according to the present embodiment recognizes characters corresponding to the stroke information indicated by all of the display strokes including the corrected strokes. Accordingly, the character correction device 1 according to the present embodiment can improve the recognition accuracy of the corrected strokes in the display strokes.

### (Second embodiment)

Next, a second embodiment will be described below with reference to the drawings. In the description of the second embodiment, differences from the first embodiment are described, and elements having the same functional configuration as those of the first embodiment are denoted by the same reference symbols as those used in the description of the first embodiment, and descriptions thereof will be omitted.

A character correction device 1A according to the present embodiment displays display strokes in accordance with the display position of display text on the screen.

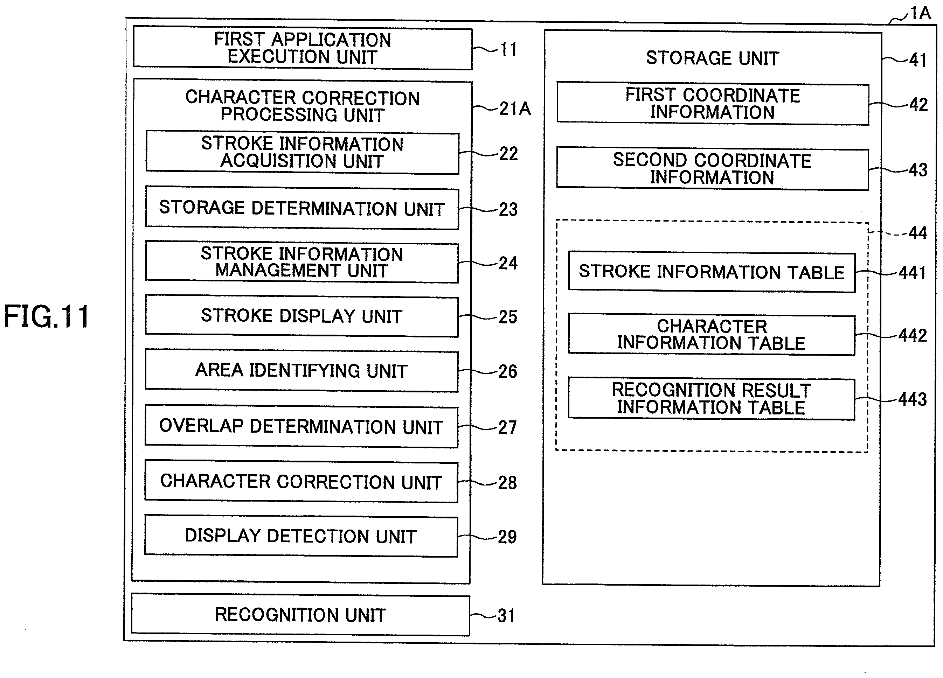

FIG. 11 is a diagram for describing the functional configuration of the character correction device according to the second embodiment. The character correction device 1A according to the present embodiment includes a character correction processing unit 21A. Furthermore, the character correction processing unit 21A includes a display detection unit 29.

The display detection unit 29 detects the display text at a predetermined position in a screen displayed on the display operation device 101. Here, the predetermined position is, for example, coordinates indicating the center of the screen displayed on the display operation device 101. Hereinafter, the predetermined position will be described as coordinates indicating the center of the screen displayed on the display operation device 101.

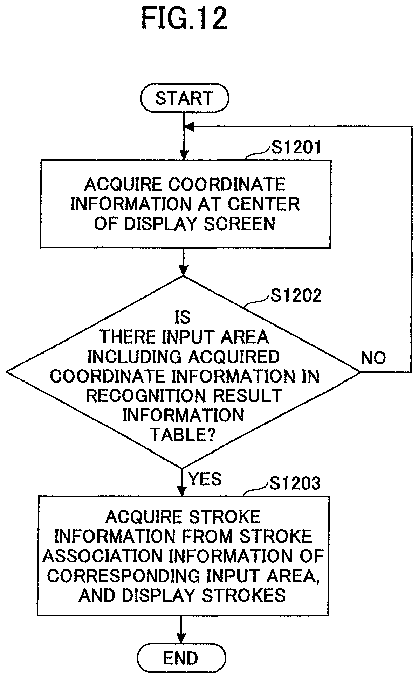

Next, operations by the character correction device 1A according to the present embodiment will be described. FIG. 12 is a flowchart illustrating an example of a display stroke display process according to the second embodiment. FIG. 12 illustrates a process of displaying the display strokes in accordance with the display position of the display text in the screen displayed on the display operation device 101.

In the character correction device 1A according to the present embodiment, the display detection unit 29 acquires coordinate information indicating the center position of the screen displayed on the display operation device 101 (step S1201). Note that the display detection unit 29 acquires coordinate information indicating the position of the center of the screen, for example, when the screen displayed on the display operation device 101 is displayed, or when the display operation device 101 is scrolled, etc.

Note that the coordinates indicating the position of the center of the screen of the present embodiment are, for example, relative coordinates indicated by the X axis being positive to the right direction from a reference point, and the Y axis being positive to the downward direction from the reference point, by using the upper left end pixel in the page image displayed by the character correction device 1 as the origin. Therefore, the coordinates indicating the center position of the screen according to the present embodiment change, for example, by a scroll operation.

Next, in the character correction device 1A, the display detection unit 29 refers to the recognition result information table 443 in the stroke association information 44, and determines whether there is an input area including the coordinates indicated by the acquired coordinate information (step S1202). That is, the display detection unit 29 determines whether there is a display text input by handwriting at the center position of the screen. Here, the fact that the coordinate information indicating the center position of the screen is included in the input area, means that the coordinates at the center of the screen are included in the area identified as the input area.

In step S1202, when there is a corresponding input area, the character correction device 1A acquires, by the stroke information management unit 24, stroke information associated with the input area determined to include the coordinates of the center of the screen, in the stroke association information 44. Then, the character correction device 1A causes the stroke display unit 25 to display the display strokes based on the acquired stroke information (step S1203).

In step S1202, when there is no corresponding input area, the character correction device 1A returns to step S1201.

Note that in FIG. 12, when the size, etc., of the display area in which the page image is displayed, changes, the coordinate information indicating the coordinates at the center of the screen and the coordinate information identifying the input area, are to be converted in accordance with the change in the size, etc. For example, when the aspect ratio of the display area changes from 2:1 to 1:2, the value of the X coordinate and the value of the Y coordinate included in the coordinate information are to be converted to 1/2 times the value and 2 times the value, respectively.

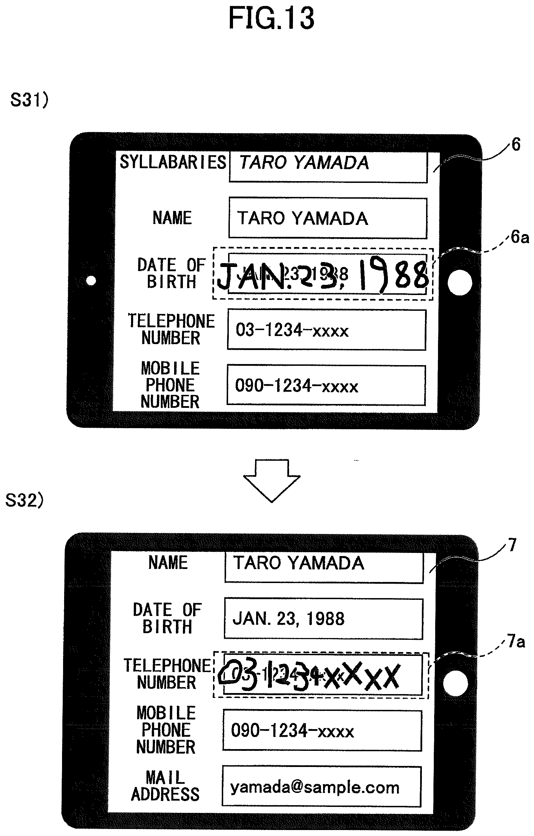

Next, with reference to FIG. 13, the case of displaying the display strokes corresponding to the display text at the center position of the screen described in FIG. 12, will be specifically described. FIG. 13 indicates diagrams for describing a specific example of the display strokes according to the second embodiment.

First, in the character correction device 1A, display strokes 6a of a display text indicating "birth date" at the center position of a screen 6, is displayed (state S31).

In the state S31, when the screen 6 is scrolled upward, and a screen 7 is displayed, the character correction device 1A determines, by the display detection unit 29, whether there is an input area including the coordinates indicating the center position of the screen 7. In the state S31, the display field in which the display text indicating "telephone number" is displayed, is the corresponding input area.

Therefore, the character correction device 1A acquires, by the stroke display unit 25, the stroke information corresponding to the display field (input area) in which the display text indicating "telephone number" is displayed, and displays display strokes 7a (state S32).

As described above, the character correction device 1A according to the present embodiment can display the display strokes corresponding to the display text at the predetermined position on the screen, without the user specifying the display text to be corrected.

Therefore, in the present embodiment, for example, when it is desired to confirm the penmanship of the handwritten input entered in the past, or to confirm what information has been input by handwriting, by simply scrolling the screen, a desired display scroll is sequentially displayed.

### (Third embodiment)

Next, a third embodiment will be described. In the description of the third embodiment, differences from the first embodiment are described, and elements having the same functional configuration as those of the first embodiment are denoted by the same reference symbols as those used in the description of the first embodiment, and descriptions thereof will be omitted.

A character correction device 1B according to the present embodiment is capable of deleting characters in the display text by correcting display strokes by handwriting input.

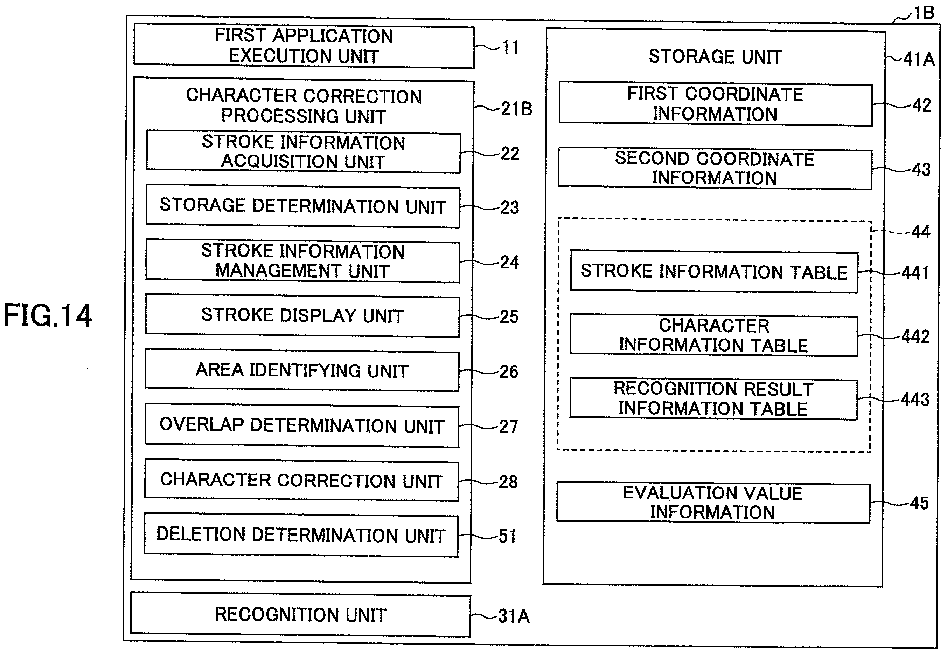

FIG. 14 is a diagram for describing the functional configuration of the character correction device according to the third embodiment. The character correction device 1B according to the present embodiment includes a character correction processing unit 21B, a recognition unit 31A, and a storage unit 41A. Furthermore, the character correction processing unit 21B includes a deletion determination unit 51. Furthermore, the storage unit 41A includes evaluation value information 45.

The recognition unit 31A recognizes characters from stroke information input by handwriting, and stroke information of display strokes corrected by the character correction processing unit 21B, and acquires the evaluation value information 45 including the recognized characters and evaluation values of characters, as a recognition result.

The evaluation value information 45 is information acquired as a recognition result by the recognition unit 31A, and is information including characters recognized from the stroke information and evaluation values of characters. Here, the evaluation value is a value indicating the likelihood of the character recognized from the stroke information. Note that the evaluation value information 45 may include a plurality of characters and evaluation values of these characters.

Based on the evaluation value information 45 acquired as a recognition result by the recognition unit 31A, the deletion determination unit 51 determines whether the content input by handwriting is deletion of a character. That is, when the evaluation value of the character indicating deletion in the evaluation value information 45 acquired as the recognition result by the recognition unit 31A, is greater than or equal to a second threshold value set in advance, the deletion determination unit 51 determines that the input content is to delete a character. Here, a character indicating deletion is, for example, a deletion symbol that can be represented by "-".

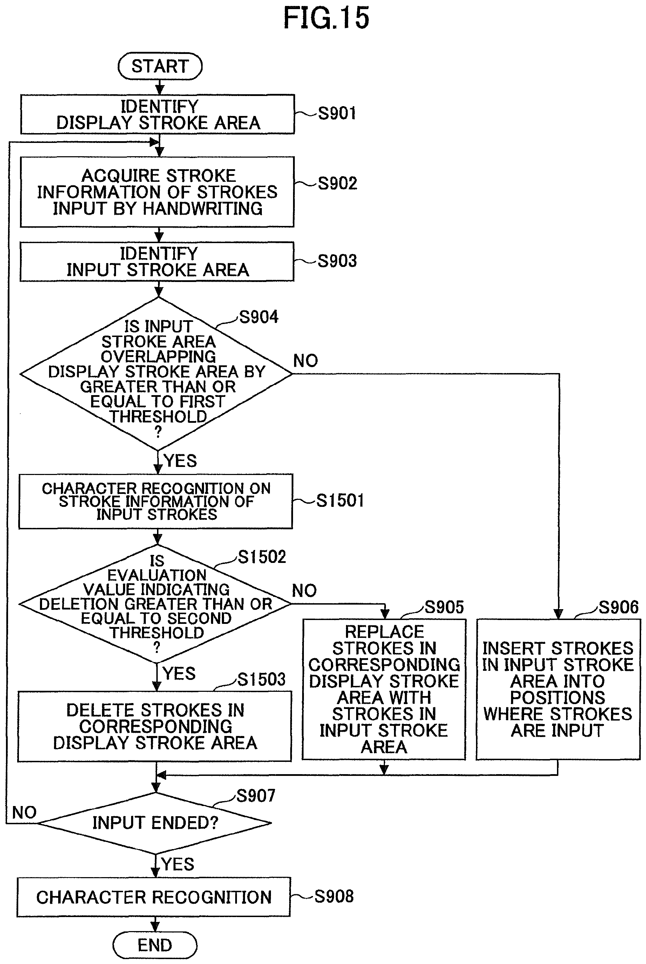

Next, operations by the character correction device 1B according to the present embodiment will be described. FIG. 15 is a flowchart illustrating an example of a display text correction process according to the third embodiment. In FIG. 15, a process of deleting the display text displayed on the character correction device 1B by handwriting input, will be mainly described. Note that the case of replacing or inserting a character by handwriting input is the same as that described in FIG. 9 of the first embodiment, and therefore the descriptions thereof will be omitted.

In step S904, when the overlap determination unit 27 determines that the proportion of the area of the input stroke area overlapping the display stroke area, is greater than or equal to the first threshold value, the character correction device 1B recognizes, by the recognition unit 31A, a character from the stroke information indicating the strokes input by handwriting, and acquires a recognition result (step S1501). Here, the acquired recognition result includes the character recognized from the stroke information and the evaluation value information 45 including the evaluation value of the character.

Next, in the character correction device 1B according to the present embodiment, the deletion determination unit 51 determines whether the evaluation value of the character indicating deletion in the evaluation value information 45, is greater than or equal to the second threshold (step S1502).

In step S1502, when the deletion determination unit 51 determines that the evaluation value of the character indicating deletion in the evaluation value information 45 is greater than or equal to the second threshold value, the character correction device 1B causes the character correction unit 28 to delete the strokes in the corresponding display stroke area (step S1503). That is, the character correction unit 28 deletes the strokes in the display stroke area in which the proportion of overlapping the input stroke area is determined to be greater than or equal to the first threshold in step S904.

In step S1503, when the deletion determination unit 51 does not determine that the evaluation value of the character indicating deletion in the evaluation value information 45 is greater than or equal to the second threshold value, the character correction device 1B proceeds to step S905. That is, as described with reference to FIG. 9, the character correction device 1B replaces the strokes in the display stroke area with the strokes in the input stroke area, by the character correction unit 28.

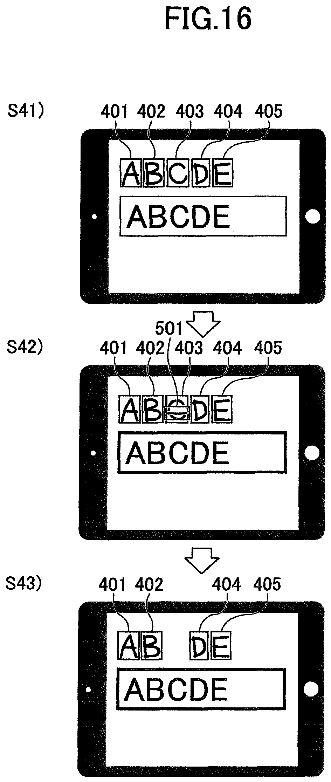

Next, with reference to FIG. 16, the case of correcting the display text described with reference to FIG. 15, particularly, the case of deleting a character, will be specifically described. FIG. 16 is a diagram for describing a specific example of display text correction according to the third embodiment.

First, it is assumed that the display strokes of the display text "ABCDE" are displayed on the display operation device 101 of the character correction device 1B, and display stroke areas 401 to 405 are identified (state S41).

It is assumed that the character correction device 1B performs handwriting input for deleting the letter "C" in the display stroke area 402 in the state S41. Then, the character correction device 1B identifies an input stroke area 501 of the stroke input by handwriting (state S42). In the example of FIG. 16, the area identifying unit 26 identifies the input stroke area 501 of the character "-" indicating deletion.

In the state S42 of FIG. 12, the proportion of the area of the input stroke area 501 overlapping the display stroke area 403, which is among the display stroke areas 401 to 405, is 1/2 or more. Therefore, the overlap determination unit 27 determines that the input stroke area 501 overlaps the display stroke area 403 by greater than or equal to a first threshold.

Furthermore, the deletion determination unit 51 determines whether the evaluation value of the character indicating deletion included in the evaluation value information 45, is greater than or equal to a second threshold value. For example, the evaluation value information 45 includes characters and evaluation values such as the character "-" (Chinese numeral) and an evaluation value "50", the character "-" (hyphen) and an evaluation value "40", and the character "-" indicating deletion and an evaluation value "35", etc., and it is assumed that the second threshold value is "30". In this case, the deletion determination unit 51 determines that the evaluation value of the character indicating deletion included in the evaluation value information 45, is greater than or equal to the second threshold value.

Based on the determination result, the character correction device 1B deletes the strokes in the display stroke area 403, by the character correction unit 28 (state S43).

In this manner, the character correction device 1B according to the present embodiment can further correct the display strokes by handwriting input. Then, the character correction device 1B can recognize the strokes indicated by the corrected display strokes, and acquire a character as the recognition result, to delete a character from the display text.

### (Fourth embodiment)

Next, a fourth embodiment will be described. In the description of the fourth embodiment, differences from the first embodiment are described, and elements having the same functional configuration as those of the first embodiment are denoted by the same reference symbols as those used in the description of the first embodiment, and descriptions thereof will be omitted.

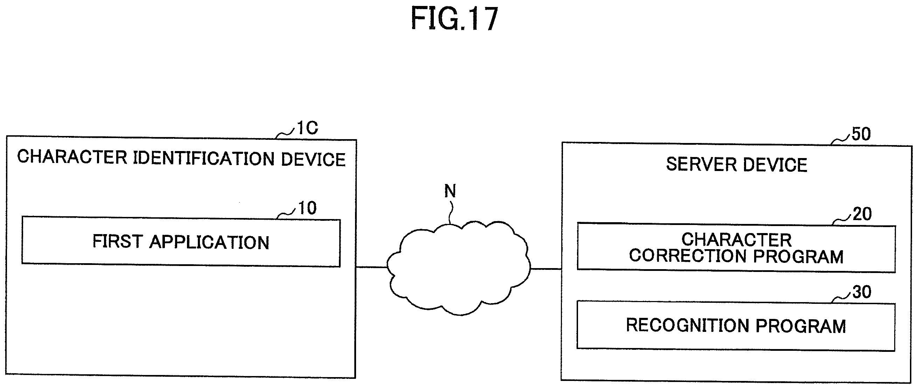

In the present embodiment, the case where the character correction program 20 and the recognition program 30 are installed in a device different from the character correction device 1, will be described. FIG. 17 is a diagram for describing an example of the character correction system according to the fourth embodiment.

A character correction device 1C according to the present embodiment includes the first application 10. Furthermore, a server device 50 connected to the character correction device 1C via a network N includes the character correction program 20 and the recognition program 30.

In the present embodiment, in the handwriting input process, the character correction device 1C causes the first application 10 to transmit, to the server device 50, stroke information of strokes input by handwriting by the user, and the coordinate information identifying an input area where the strokes have been input by handwriting. In the server device 50, the recognition program 30 recognizes characters from the stroke information, and transmits the characters acquired as the recognition result, to the character correction device 1C. Furthermore, the server device 50 stores, in a storage area in the server device 50, the stroke association information 44 in which the stroke information, the characters acquired as the recognition result, and the coordinate information identifying the input area are associated with each other.

Note that in the handwriting input process, the stroke association information 44 is stored in the server device 50; however, the present embodiment is not limited as such. The server device 50 may transmit the stroke association information 44 to the character correction device 1, and the stroke association information 44 may be stored in the character correction device 1.

In the present embodiment, in the handwriting correction process, the character correction device 1C acquires the stroke association information 44 from the server device 50 by the first application 10, and displays the display strokes based on the stroke information in the acquired stroke association information 44. Furthermore, the character correction device 1C transmits stroke information indicating the corrected display strokes corrected by handwriting input, to the server device 50. The server device 50 recognizes characters from the stroke information indicating the corrected display strokes, and transmits the acquired characters as the recognition result to the character correction device 1C. Furthermore, the server device 50 updates the stroke association information 44 based on the stroke information indicating the corrected display strokes.

As described above, in the character correction system according to the present embodiment, the display text displayed on the character correction device 1C is corrected. According to the configuration of the present embodiment, if the first application 10 is installed, the character correction device 1C can perform the correction by handwriting input, as described in the first to third embodiments.

Furthermore, by configuring the server device 50 to include the recognition program 30, for example, it is possible for the server device 50 to manage information used by the recognition program 30 for recognizing characters. Accordingly, in the server device 50, when the database, etc., referred to by the recognition program 30 is updated and the accuracy of character recognition by the recognition program 30 is improved, the recognition of the strokes input by handwriting for correction, can take advantage of the improved accuracy.

### (Fifth embodiment)

Next, a fifth embodiment will be described. In the description of the fifth embodiment, differences from the first embodiment are described, and elements having the same functional configuration as those of the first embodiment are denoted by the same reference symbols as those used in the description of the first embodiment, and descriptions thereof will be omitted.

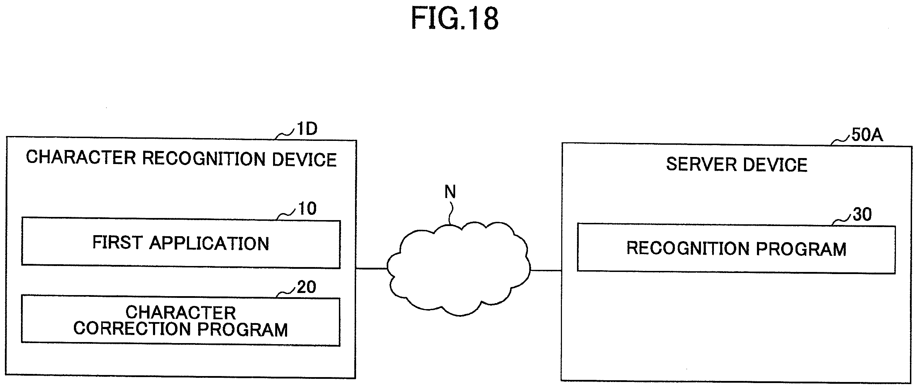

In the present embodiment, the case where the recognition program 30 is installed in a device different from the character correction device 1 will be described. FIG. 18 is a diagram illustrating an example of the character correction system according to the fifth embodiment.

A character correction device 1D according to the present embodiment includes the first application 10 and the character correction program 20. Furthermore, a server device 50A connected to the character correction device 1D via the network N, includes the recognition program 30.

In the present embodiment, in the handwriting input process, the character correction device 1D transmits the stroke information input by handwriting by the user, to the server device 50A by the first application. In the server device 50A, the recognition program 30 recognizes characters from the stroke information, and transmits the acquired characters as the recognition result, to the character correction device 1D. Then, the character correction device 1D stores the stroke association information 44 associating the stroke information with the characters acquired as the recognition result, in the storage unit 41.

Note that in the handwriting input process, the stroke association information 44 is stored in the character correction device 1C; however, the present embodiment is not limited as such. The character correction device 1D may transmit the coordinate information for identifying the input area to which the handwritten input is made, to the server device 50A, and the stroke association information 44 may be stored in the server device 50A.

In the present embodiment, in the handwriting correction process, the character correction device 1D acquires the stroke association information 44 from the storage unit 41 by the character correction program 20, and displays the display strokes based on the stroke information of the acquired stroke association information 44. Furthermore, the character correction device 1D transmits stroke information indicating the corrected display strokes corrected by handwriting input, to the server device 50A. The server device 50A recognizes characters from the stroke information indicating the corrected display strokes and transmits the acquired characters as the recognition result, to the character correction device 1D. Then, the character correction device 1 updates the stroke association information based on the stroke information indicating the corrected display strokes and the characters acquired as the recognition result.

As described above, in the character correction system according to the present embodiment, the display text displayed on the character correction device 1D is corrected. With the configuration of the present embodiment, if the first application 10 and the character correction program 20 are installed, the character correction device 1D can perform correction by handwriting input as described in the first to third embodiments.

Embodiments of the present invention have been described in detail above; however, the present invention is not limited to the specific embodiments described herein, and a variety of corrections and changes may be made without departing from the scope of the present invention.

### REFERENCE SIGNS LIST

- 1: character correction device
- 10: first application
- 20: character correction program
- 21: character correction processing unit
- 22: stroke information acquisition unit
- 23: storage determination unit
- 24: stroke information management unit
- 25: stroke display unit
- 26: area identifying unit
- 27: overlap determination unit
- 28: character correction unit
- 30: recognition program

## Claims

1. An input control program **characterized by** causing a computer to execute:
a process of displaying a stroke in association with an input item, the stroke being input by handwriting with respect to the input item and the stroke being saved in association with the input item; and
a process of correcting an input result obtained from the stroke displayed in the input item, according to a correction made with respect to the displayed stroke.

2. The input control program according to claim 1, **characterized in that** the displaying process includes displaying the stroke in response to the input item being selected.

3. The input control program according to claim 1, **characterized in that** the displaying process includes displaying the stroke in response to the input item being displayed in a particular area in a display screen.

4. An input control program **characterized by** causing a computer to execute:
a process of storing a stroke that is input by handwriting with respect to an input item, and a recognition character corresponding to the stroke input by handwriting;
a process of displaying the recognition character in the input item; and
a process of displaying the stroke in response to the input item being selected.

5. The input control program according to claim 4, **characterized in that** the process of displaying the stroke includes a process of displaying the stroke at a position different from a display position of the recognition character in the input item.

6. The input control program according to claim 4, **characterized in that** the process of displaying the stroke includes a process of causing a display color of the stroke to be different from a display color of the recognition character in the input item.

7. The input control program according to any one of claims 1 through 6, **characterized in that** the stroke input by handwriting is input with a stylus.

8. An input control device **characterized by** comprising:
a display unit configured to display a stroke in association with an input item, the stroke being input by handwriting with respect to the input item and the stroke being saved in association with the input item; and
a correction unit configured to correct an input result obtained from the stroke displayed in the input item, according to a correction made with respect to the displayed stroke.

9. An input control device **characterized by** comprising:
a storage unit configured to store a stroke that is input by handwriting with respect to an input item, and a recognition character corresponding to the stroke input by handwriting;
a recognition character display unit configured to display the recognition character in the input item; and
a stroke display unit configured to display the stroke in response to the input item being selected.

10. An input control method executed by a computer, the input control method being **characterized in that** the computer executes:
a process of displaying a stroke in association with an input item, the stroke being input by handwriting with respect to the input item and the stroke being saved in association with the input item; and
a process of correcting an input result obtained from the stroke displayed in the input item, according to a correction made with respect to the displayed stroke.

11. An input control method executed by a computer, the input control method being **characterized in that** the computer executes:
a process of storing a stroke that is input by handwriting with respect to an input item, and a recognition character corresponding to the stroke input by handwriting;
a process of displaying the recognition character in the input item; and
a process of displaying the stroke in response to the input item being selected.

12. A character correction program **characterized by** causing a computer to execute processes comprising:
saving a stroke information group of strokes input by handwriting with respect to a first application, in association with each area of text in the first application;
displaying the stroke information group corresponding to a particular one of the areas in the first application, with respect to the text in the particular one of the areas in the first application; and
updating the text in the particular one of the areas according to a result obtained by recognizing stroke information including at least a target of correction, in response to the correction being made with respect to the displayed stroke information group.

13. The character correction program according to claim 12, **characterized in that** the updating process includes updating the text in the particular one of the areas, according to a result obtained by recognizing the stroke information including stroke information of a stroke corrected according to the correction made with respect to the displayed stroke information group, and stroke information of strokes before and after the corrected stroke.

14. The character correction program according to claim 12 or 13, **characterized in that** the updating process includes updating the stroke information group saved in association with each of the areas of the text.

15. The character correction program according to any one of claims 12 through 14, **characterized in that** the displaying process includes displaying the stroke information group corresponding to one of the areas of the text, when the one of the areas of the text includes coordinates indicating a predetermined position in a screen.

16. The character correction program according to claim 15, wherein the coordinates indicating the predetermined position are relative coordinates indicating a relative relationship of the predetermined position and a reference point in a page image displayed on the screen.

17. The character correction program according to any one of claims 12 through 16, wherein each of the areas of the text is an area in which the stroke information group recognized by one recognition process has been input by handwriting.

18. The character correction program according to any one of claims 12 through 17, **characterized in that** the text is a recognized character group of characters input by handwriting.

19. A character correction device **characterized by** comprising:
a saving unit configured to save a stroke information group of strokes input by handwriting with respect to a first application, in association with each area of text in the first application;
a display unit configured to display the stroke information group corresponding to a particular one of the areas in the first application, with respect to the text in the particular one of the areas in the first application; and
an updating unit configured to update the text in the particular one of the areas according to a result obtained by recognizing stroke information including at least a target of correction, in response to the correction being made with respect to the displayed stroke information group.

20. A character correction method executed by a computer, the character correction method being **characterized in that** the computer executes:
saving a stroke information group of strokes input by handwriting with respect to a first application, in association with each area of text in the first application;
displaying the stroke information group corresponding to a particular one of the areas in the first application, with respect to the text in the particular one of the areas in the first application; and
updating the text in the particular one of the areas according to a result obtained by recognizing stroke information including at least a target of correction, in response to the correction being made with respect to the displayed stroke information group.
